# EUROPEAN PATENT APPLICATION

(11) **EP 3 352 266 A1**
(43) Date of publication of application: **25.07.2018**
(21) Application number: 16846511.0
(22) Date of filing: 14.09.2016
(51) Int. Cl.: H01M 4/62, H01M 4/139, H01M 10/052, H01M 10/0566

(54) **POSITIVE ELECTRODE MATERIAL FOR NONAQUEOUS ELECTROLYTE SECONDARY BATTERY**

(30) Priority: 14.09.2015 JP 2015180407; 18.12.2015 JP 2015247686
(71) Applicant: Osaka Soda Co., Ltd., Osaka-shi, Osaka 550-0011 (JP)
(72) Inventor: TAKAHASHI, Kazuhiro, Osaka-shi Osaka 550-0011 (JP); NAKAMURA, Miwa, Osaka-shi Osaka 550-0011 (JP); MATSUO, Takashi, Osaka-shi Osaka 550-0011 (JP); UEDA, Hideaki, Osaka-shi Osaka 550-0011 (JP)
(74) Representative: Müller-Boré & Partner Patentanwälte PartG mbB
(86) International application number: PCT/JP2016/077110
(87) International publication number: WO 2017/047640

(57) **Abstract**

There is provided a cathode material for a nonaqueous electrolyte secondary battery that has excellent flexibility and binding properties, and can effectively reduce the internal resistance of a nonaqueous electrolyte secondary battery, and effectively improve the charge-discharge cycle characteristics of the nonaqueous electrolyte secondary battery. The cathode material comprises a cathode active material and a binder, wherein the binder is a copolymer comprising a structural unit (A) derived from a (meth)acrylate monomer, a structural unit (B) derived from a carboxylic acid group-containing ethylenically unsaturated monomer, and a structural unit (C) derived from a polyfunctional (meth)acrylate monomer having a functionality of 5 or less, and the cathode material is substantially free of a thickener.

## Description

### Technical Field

The present invention relates to a cathode material for a nonaqueous electrolyte secondary battery. More particularly, the present invention relates to a cathode material for a nonaqueous electrolyte secondary battery that has excellent flexibility and binding properties, and can effectively reduce the internal resistance of a nonaqueous electrolyte secondary battery, and effectively improve the charge-discharge cycle characteristics of the nonaqueous electrolyte secondary battery, a cathode comprising the cathode material, and a nonaqueous electrolyte secondary battery comprising the cathode.

### Background Art

It is known that a binder is used in an electrode of a battery. Representative examples of nonaqueous electrolyte secondary batteries having electrodes in which a binder is used include lithium secondary batteries. Lithium-ion secondary batteries have high energy densities and high voltages, and thus, are used for electronic apparatuses such as mobile phones, laptop computers, and camcorders. In recent years, the growing awareness of environmental protection and the enactment of related laws have pushed forward the application of these lithium-ion secondary batteries to storage batteries for use in electric vehicles, hybrid electric vehicles, and other vehicles, or for storing household electric power. For all these uses, the batteries desirably have high energy densities, in consideration of the occupied volume, the mass, and the like of the battery.

A lithium-ion secondary battery is typically composed of an anode, a cathode, a separator, an electrolytic solution, and the like. For example, the anode is obtained by applying a coating solution containing an anode active material such as graphite or hard carbon capable of intercalation and de-intercalation of lithium ions, a conductive additive, a binder, and a solvent, onto a current collector represented by copper foil, followed by drying. At present, an aqueous dispersion containing a styrene-butadiene rubber (hereinafter abbreviated as "SBR") as a binder is typically used as the coating solution.

The cathode is produced by preparing a coating solution by mixing a cathode active material such as layered lithium cobalt oxide or spinel-type lithium manganese oxide, a conductive additive such as carbon black, and a binder such as polyvinylidene fluoride or polytetrafluoroethylene, and dispersing the mixture in a polar solvent such as N-methylpyrrolidone, and then applying the coating solution onto a current collector represented by aluminum foil in the same manner as the anode, followed by drying.

In order to ensure a high binding force in these lithium-ion batteries, the amount of the binder to be added needs to be increased. This leads to a problem of decreased performance, for example. Furthermore, in consideration of recovery, costs, toxicity, and environmental burden, it is desired to use an aqueous binder instead of a binder in which a polar organic solvent such as N-methylpyrrolidone is used. However, the use of an SBR binder, for example, which is an aqueous binder, has the problem of causing oxidative degradation of a cathode in a cathode environment, resulting in degraded battery characteristics (an increase in internal resistance or degradation in charge-discharge cycle characteristics). Thus, polyvinylidene fluoride or polytetrafluoroethylene dispersed in N-methylpyrrolidone as a solvent is still widely used as a binder of a cathode. There is, therefore, a desire for the development of an aqueous binder that can be suitably used for a cathode of a nonaqueous electrolyte secondary battery.

For example, aqueous acrylic acid ester binders are proposed in Patent Literatures 1 and 2, such as a binder comprising a copolymer comprising an aromatic vinyl, a conjugated diene, a (meth)acrylic acid ester, and an ethylenically unsaturated carboxylic acid (Patent Literature 1); and a binder comprising a polymer comprising a bifunctional (meth)acrylate (Patent Literature 2). However, the use of these aqueous binders for cathodes has the problem of, for example, degrading the charge-discharge cycle characteristics under high-temperature conditions. In particular, the use of these binders for cathodes has a problem with oxidation resistance under high-voltage conditions, possibly leading to poor battery characteristics.

Furthermore, the use of such an aqueous acrylic acid ester-based binder reduces the viscosity of the coating solution (slurry) for the preparation of an electrode. Thus, the addition of a thickener is required to obtain a smooth paste to smoothly apply the electrode. However, oxidation of the thickener during the charging and discharging process of a battery is one cause of degraded battery characteristics.

Patent Literature 3 proposes a copolymer of a nitrile group-containing (meth)acrylate as a binder that exhibits sufficient adhesion to a current collector without using a thickener. This binder, however, is for use with an anode, and Patent Literature 3 nowhere contemplates the possibility of using this binder for a cathode, which requires high oxidation resistance as well as flexibility to be thickly applied.

### Citation List

### Patent Literature

Patent Literature 1: JP H11-025989 A
Patent Literature 2: JP 2001-256980 A
Patent Literature 3: JP 2012-51999 A

### Summary of Invention

### Technical Problem

The present invention was made in view of the above-described problems with prior art, and it is a main object of the present invention to provide a cathode material for a nonaqueous electrolyte secondary battery that has excellent flexibility and binding properties, and can effectively reduce the internal resistance of a nonaqueous electrolyte secondary battery, and effectively improve the charge-discharge cycle characteristics of the nonaqueous electrolyte secondary battery. It is another object of the present invention to provide a cathode comprising the cathode material and a nonaqueous electrolyte secondary battery comprising the cathode.

### Solution to Problem

The inventors of the present invention conducted extensive research to solve the aforementioned problem. As a result, the inventors found that a cathode material comprising a cathode active material and a binder, wherein the binder is a copolymer comprising a structural unit (A) derived from a (meth)acrylate monomer, a structural unit (B) derived from a carboxylic acid group-containing ethylenically unsaturated monomer, and a structural unit (C) derived from a polyfunctional (meth)acrylate monomer having a functionality of 5 or less, and the cathode material is substantially free of a thickener, has excellent flexibility and binding properties, and can effectively reduce the internal resistance of a nonaqueous electrolyte secondary battery, and effectively improve the charge-discharge cycle characteristics of the nonaqueous electrolyte secondary battery. The present invention was completed as a result of further research based on these findings.

In summary, the present invention provides aspects of invention as itemized below.
Item 1. A cathode material comprising a cathode active material and a binder, wherein
the binder is a copolymer comprising a structural unit (A) derived from a (meth)acrylate monomer, a structural unit (B) derived from a carboxylic acid group-containing ethylenically unsaturated monomer, and a structural unit (C) derived from a polyfunctional (meth)acrylate monomer having a functionality of 5 or less, and the cathode material is substantially free of a thickener.
Item 2. The cathode material according to item 1, wherein the (meth)acrylate monomer of the structural unit (A) is at least one of a hydroxyl group-containing (meth)acrylate and a (meth)acrylate.
Item 3. The cathode material according to item 2, wherein the hydroxyl group-containing (meth)acrylate is an alkylene glycol mono(meth)acrylate having a molecular weight of 100 to 1000.
Item 4. The cathode material according to any one of items 1 to 3, wherein the carboxylic acid group-containing ethylenically unsaturated monomer of the structural unit (B) is (meth)acrylic acid.
Item 5. The cathode material according to any one of items 1 to 4, wherein the copolymer comprises a structural unit (A-1) derived from a hydroxyl group-containing (meth)acrylate monomer, a structural unit (A-2) derived from a (meth)acrylate monomer, a structural unit (B) derived from a carboxylic acid group-containing ethylenically unsaturated monomer, and a structural unit (C) derived from a polyfunctional (meth)acrylate monomer, and
the copolymer has a mass ratio of the structural units (A-1), (A-2), (B), and (C) of 1-45:15-98:0.5-15:0.5-25.
Item 6. The cathode material according to any one of items 1 to 5, wherein the cathode active material comprises an alkali metal-containing composite oxide represented by any of the compositions:
   AMO₂, wherein A represents an alkali metal, and M comprises a single transition metal or two or more transition metals, and optionally partially comprises a non-transition metal;
   AM₂O₄, wherein A represents an alkali metal, and M comprises a single transition metal or two or more transition metals, and optionally partially comprises a non-transition metal;
   A₂MO₃, wherein A represents an alkali metal, and M comprises a single transition metal or two or more transition metals, and optionally partially comprises a non-transition metal; and
   AMBO₄, wherein A represents an alkali metal, B represents P, Si, or a mixture thereof, and M comprises a single transition metal or two or more transition metals, and optionally partially comprises a non-transition metal.
Item 7. A cathode for a nonaqueous electrolyte secondary battery comprising the cathode material according to any one of items 1 to 6 and a cathode current collector.
Item 8. A method for producing a cathode for a nonaqueous electrolyte secondary battery comprising the step of applying the cathode material according to any one of items 1 to 6 to a surface of a cathode current collector.
Item 9. A nonaqueous electrolyte secondary battery comprising the cathode according to item 7, an anode, and an organic electrolytic solution.

### Advantageous Effects of Invention

According to the present invention, because the cathode material for a nonaqueous electrolyte secondary battery comprises a cathode active material and a binder, wherein the binder is a copolymer comprising a structural unit (A) derived from a (meth)acrylate monomer, a structural unit (B) derived from a carboxylic acid group-containing ethylenically unsaturated monomer, and a structural unit (C) derived from a polyfunctional (meth)acrylate monomer having a functionality of 5 or less, and the cathode material is substantially free of a thickener, the cathode material has excellent flexibility and binding properties, and can effectively reduce the internal resistance of a nonaqueous electrolyte secondary battery, and effectively improve the charge-discharge cycle characteristics of the nonaqueous electrolyte secondary battery. That is, a nonaqueous electrolyte secondary battery according to the present invention, in which the cathode material is used as a cathode, has low internal resistance and excellent charge-discharge cycle characteristics.

### Description of Embodiments

### 1. Cathode Material

The cathode material of the present invention comprises a cathode active material and a binder, wherein the binder is a copolymer comprising a structural unit (A) derived from a (meth)acrylate monomer, a structural unit (B) derived from a carboxylic acid group-containing ethylenically unsaturated monomer, and a structural unit (C) derived from a polyfunctional (meth)acrylate monomer having a functionality of 5 or less, and the cathode material is substantially free of a thickener. The cathode material of the present invention will be hereinafter described in detail.

The cathode active material contained in the cathode material of the present invention is not particularly limited, and a known cathode active material used for a cathode of a nonaqueous electrolyte secondary battery may be used. The cathode active material preferably comprises an alkali metal-containing composite oxide represented by, for example, the composition: AMO₂, AM₂O₄, A₂MO₃, or AMBO₄. In these compositions, A represents an alkali metal; M comprises a single transition metal or two or more transition metals, and optionally partially comprises a non-transition metal; and B represents P, Si, or a mixture thereof. The cathode active material is preferably in the form of a powder. The particle diameter of the powder is preferably 50 µm or less, and more preferably 20 µm or less, for example. The cathode active material has an electromotive force of 3 V (vs. Li/Li+) or more.

Specific examples of the cathode active material include lithium cobalt oxide, lithium nickel oxide, lithium nickel manganese cobalt oxide (ternary system), spinel-type lithium manganese oxide, and lithium iron phosphate.

The content of the cathode active material in the cathode material is, for example, about 99.9 to 50% by mass, more preferably about 99.5 to 70% by mass, and still more preferably about 99 to 85% by mass, although not particularly limited thereto. The above-described cathode active materials may be used alone or in combination of two or more.

The binder contained in the cathode material of the present invention is a copolymer comprising a structural unit (A) derived from a (meth)acrylate monomer, a structural unit (B) derived from a carboxylic acid group-containing ethylenically unsaturated monomer, and a structural unit (C) derived from a polyfunctional (meth)acrylate monomer having a functionality of 5 or less. That is, the binder is a copolymer of the monomers of the structural units (A) to (C) (the (meth)acrylate monomer, the carboxylic acid group-containing ethylenically unsaturated monomer, and the polyfunctional (meth)acrylate monomer having a functionality of 5 or less).

In the structural unit (A), the (meth)acrylate monomer is preferably at least one of a hydroxyl group-containing (meth)acrylate and a (meth)acrylate. As used herein, the "(meth)acrylate" refers to "acrylate" or "methacrylate". The same applies to similar expressions.

The hydroxyl group-containing (meth)acrylate is, for example, a monomer represented by the following general formula (1):

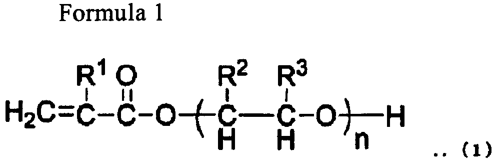

In the monomer of the structural unit (A) represented by general formula (1), R¹ is a hydrogen atom or a C₁₋₄ linear or branched alkyl group; R² and R³ are each a hydrogen atom or a C₁₋₄ linear or branched alkyl group; and n is an integer from 2 to 30.

The hydroxyl group-containing (meth)acrylate monomer represented by general formula (1) is preferably an alkylene glycol mono(meth)acrylate having a molecular weight of 150 to 1000. Specific examples of such alkylene glycol mono(meth)acrylates include diethylene glycol mono(meth)acrylate, triethylene glycol mono(meth)acrylate, tetraethylene glycol mono(meth)acrylate, polyethylene glycol mono(meth)acrylate, dipropylene glycol mono(meth)acrylate, tripropylene glycol mono(meth)acrylate, tetrapropylene glycol mono(meth)acrylate, and polypropylene glycol mono(meth)acrylate. These alkylene glycol mono(meth)acrylates may be used alone or in combination of two or more. Among the above, tetraethylene glycol mono(meth)acrylate, polyethylene glycol mono(meth)acrylate, tetrapropylene glycol mono(meth)acrylate, and polypropylene glycol mono(meth)acrylate are preferred.

Examples of the (meth)acrylate monomer include (meth)acrylic acid esters such as methyl (meth)acrylate, ethyl (meth)acrylate, propyl (meth)acrylate, isopropyl (meth)acrylate, n-butyl (meth)acrylate, isobutyl (meth)acrylate, n-amyl (meth)acrylate, isoamyl (meth)acrylate, n-hexyl (meth)acrylate, 2-ethylhexyl (meth)acrylate, and lauryl (meth)acrylate (dodecyl (meth)acrylate), and (meth)acrylic acid amides. These (meth)acrylate monomers may be used alone or in combination of two or more.

In the structural unit (B), specific examples of the carboxylic acid group-containing ethylenically unsaturated monomer include monofunctional monomers such as methacrylic acid and acrylic acid; and bifunctional monomers such as fumaric acid, maleic acid, itaconic acid, citraconic acid, mesaconic acid, glutaconic acid, 1,2,3,6-tetrahydrophthalic acid, 3-methyl-1,2,3,6-tetrahydrophthalic acid, 4-methyl-1,2,3,6-tetrahydrophthalic acid, methyl-3,6-endomethylene-1,2,3,6-tetrahydrophthalic acid, exo-3,6-epoxy-1,2,3,6-tetrahydrophthalic acid, and himic acid. Moreover, as a bifunctional carboxylic acid group-containing ethylenically unsaturated monomer, an anhydride of an unsaturated carboxylic acid, for example, maleic anhydride, may be used. Such an anhydride may also be saponified. The carboxylic acid group-containing ethylenically unsaturated monomer is preferably methacrylic acid, acrylic acid, fumaric acid, maleic acid, or itaconic acid. More preferably, the carboxylic acid group-containing ethylenically unsaturated monomer is methacrylic acid, acrylic acid, or itaconic acid. These carboxylic acid group-containing ethylenically unsaturated monomers may be used alone or in combination of two or more.

The proportion of the structural unit (B) is, for example, preferably about 0.5 to 50 parts by mass, and more preferably about 1 to 30 parts by mass, per 100 parts by mass of the structural unit (A), although not particularly limited thereto.

In addition to the structural unit (B), the copolymer forming the binder may also contain structural units similar to the structural unit (B). Examples of structural units similar to the structural unit (B) include a structural unit derived from an ethylenically unsaturated monomer having at least one functional group different from the carboxylic acid group. Examples of the functional group different from the carboxylic acid group include a nitrile group, a ketone group, an organic acid vinyl ester group, and a vinyl alcohol group. That is, examples of monomers of structural units similar to the structural unit (B) include a nitrile group-containing ethylenically unsaturated monomer, a carboxylic acid group-containing ethylenically unsaturated monomer, a ketone group-containing ethylenically unsaturated monomer, and an organic acid vinyl ester group-containing ethylenically unsaturated monomer. Moreover, a vinyl alcohol group-containing structural unit may be obtained by saponifying a polymer of an organic acid vinyl ester monomer with an alkali.

The nitrile group-containing ethylenically unsaturated monomer is not particularly limited so long as it contains a nitrile group; preferably, α,β-unsaturated nitrile monomers such as acrylonitrile, methacrylonitrile, α-chloroacrylonitrile, crotononitrile, α-ethylacrylonitrile, α-cyanoacrylate, vinylidene cyanide, and fumaronitrile are used. More preferably, acrylonitrile and methacrylonitrile are used. These nitrile group-containing ethylenically unsaturated monomers may be used alone or in combination of two or more.

Specific examples of the ketone group-containing ethylenically unsaturated monomer include vinyl ketones such as methyl vinyl ketone, ethyl vinyl ketone, isopropyl vinyl ketone, isobutyl vinyl ketone, t-butyl vinyl ketone, and hexyl vinyl ketone. These ketone group-containing ethylenically unsaturated monomers may be used alone or in combination of two or more.

Specific examples of the organic acid vinyl ester group-containing ethylenically unsaturated monomer include vinyl acetate, vinyl propionate, vinyl butyrate, vinyl trimethyl acetate, vinyl caproate, vinyl caprylate, vinyl laurate, vinyl palmitate, and vinyl stearate. These organic acid vinyl ester group-containing ethylenically unsaturated monomers may be used alone or in combination of two or more. Among the above, vinyl acetate and vinyl propionate are preferred.

As described above, a vinyl alcohol group-containing structural unit may be obtained by saponifying a polymer of an organic acid vinyl ester monomer with an alkali.

In the structural unit (C), the polyfunctional (meth)acrylate monomer having a functionality of 5 or less serves as a cross-linking agent. Examples of the polyfunctional (meth)acrylate monomer include bifunctional to pentafunctional (meth)acrylates. A bifunctional to pentafunctional cross-linking agent has good dispersibility in emulsion polymerization, and has excellent properties (bending properties and binding properties) as a binder. The polyfunctional (meth)acrylate monomer is preferably a trifunctional or tetrafunctional (meth)acrylate.

Specific examples of bifunctional (meth)acrylate monomers include triethylene glycol di(meth)acrylate, tetraethylene glycol di(meth)acrylate, polyethylene glycol di(meth)acrylate, tripropylene glycol di(meth)acrylate, tetrapropylene glycol di(meth)acrylate, polypropylene glycol di(meth)acrylate, polytetramethylene glycol di(meth)acrylate, dioxane glycol di(meth)acrylate, and bis(meth)acryloyloxyethyl phosphate.

Specific examples of trifunctional (meth)acrylate monomers include trimethylolpropane tri(meth)acrylate, trimethylolpropane EO-modified tri(meth)acrylate, trimethylolpropane PO-modified tri(meth)acrylate, pentaerythritol tri(meth)acrylate, 2,2,2-tris(meth)acryloyloxy methyl ethyl succinate, ethoxylated isocyanuric acid tri(meth)acrylate, ε-caprolactone-modified tris-(2-(meth)acryloxy ethyl) isocyanurate, glycerol EO-modified tri(meth)acrylate, glycerol PO-modified tri(meth)acrylate, and tris(meth)acryloyloxyethyl phosphate. Among the above, trimethylolpropane tri(meth)acrylate, trimethylolpropane EO-modified tri(meth)acrylate, and pentaerythritol tri(meth)acrylate are preferred.

Specific examples of tetrafunctional (meth)acrylate monomers include ditrimethylolpropane tetra(meth)acrylate, pentaerythritol tetra(meth)acrylate, and pentaerythritol EO-modified tetra(meth)acrylate.

Specific examples of pentafunctional (meth)acrylate monomers include dipentaerythritol penta(meth)acrylate.

In the structural unit (C), the above-described polyfunctional (meth)acrylate monomers may be used alone or in combination of two or more.

The proportion of the structural unit (C) is, for example, preferably about 0.5 to 70 parts by mass, more preferably about 1 to 60 parts by mass, and still more preferably 2 to 50 parts by mass, per 100 parts by mass of the structural unit (A), although not particularly limited thereto.

In the copolymer forming the binder, the mass ratio of the structural units (A), (B), and (C) is preferably 1-70:0.1-15:0.1-40, more preferably 1-65:0.2-12:0.2-35, and still more preferably 1-60:0.3-10:0.3-30.

Moreover, when the copolymer contains the structural units (A), (B), and (C), the contents of these structural units in the copolymer are preferably as follows:
With regard to the content of the structural unit (A), the lower limit is preferably 1% by mass or more; and the upper limit is preferably 70% by mass or less, more preferably 65% by mass or less, and still more preferably 60% by mass or less.

With regard to the content of the structural unit (B), the lower limit is preferably 0.1% by mass or more, more preferably 0.2% by mass or more, and still more preferably 0.3% by mass or more; and the upper limit is preferably 15% by mass or less, more preferably 12% by mass or less, and still more preferably 10% by mass or less.

With regard to the content of the structural unit (C), the lower limit is preferably 0.1% by mass or more, more preferably 0.2% by mass or more, and still more preferably 0.3% by mass or more; and the upper limit is preferably 40% by mass or less, more preferably 35% by mass or less, and still more preferably 30% by mass or less.

Furthermore, when the copolymer contains a structural unit (A-1) derived from a hydroxyl group-containing (meth)acrylate, a structural unit (A-2) derived from a (meth)acrylate, a structural unit (B) derived from a carboxylic acid group-containing ethylenically unsaturated monomer, and a structural unit (C) derived from a polyfunctional (meth)acrylate monomer, the mass ratio of the structural units (A-1), (A-2), (B), and (C) is preferably 1-45:15-98:0.5-15:0.5-25, more preferably 1-40:15-75:1-10:1-25, and still more preferably 2-35:30-70:2-10:2-20.

Furthermore, when the copolymer contains the structural unit (A-1) derived from a hydroxyl group-containing (meth)acrylate, the structural unit (A-2) derived from a (meth)acrylate, the structural unit (B) derived from a carboxylic acid group-containing ethylenically unsaturated monomer, and the structural unit (C) derived from a polyfunctional (meth)acrylate monomer, the contents of these structural units in the copolymer are preferably as follows:
With regard to the content of the structural unit (A-1), the lower limit is preferably 1% by mass or more, and more preferably 2% by mass or more; and the upper limit is preferably 45% by mass or less, more preferably 40% by mass or less, and still more preferably 35% by mass or less.

With regard to the content of the structural unit (A-2), the lower limit is preferably 15% by mass or more, and more preferably 30% by mass or more; and the upper limit is preferably 98% by mass or less, more preferably 75% by mass or less, and still more preferably 70% by mass or less.

With regard to the content of the structural unit (B), the lower limit is preferably 0.5% by mass or more, more preferably 1% by mass or more, and still more preferably 2% by mass or more; and the upper limit is preferably 15% by mass or less, and more preferably 10% by mass or less.

With regard to the content of the structural unit (C), the lower limit is preferably 0.5% by mass or more, more preferably 1% by mass or more, and still more preferably 2% by mass or more; and the upper limit is preferably 25% by mass or less, and more preferably 20% by mass or less.

In the present invention, the binder is an aqueous binder used for a cathode material, which is in the form of an emulsion in which the binder is dispersed in water or an alcohol. That is, in the preparation of the cathode material of the present invention, the binder composed of the above-described copolymer is used in the form of an aqueous emulsion in which it is dispersed in water or the like, and the aqueous emulsion only may be used. The content (solid concentration) of the binder in the emulsion is, for example, preferably about 0.2 to 80% by mass, more preferably about 0.5 to 70% by mass, and still more preferably about 0.5 to 60% by mass, although not particularly limited thereto.

Examples of methods for obtaining the aqueous emulsion of the binder include, although not particularly limited to, common emulsion polymerization, soap-free emulsion polymerization, seed polymerization, and a method in which polymerization is performed after swelling seed particles with monomers and the like. Specifically, in a closed container equipped with a stirrer and a heating device, a composition containing monomers as structural units of the binder, an emulsifier, a polymerization initiator, and water, as well as optionally a dispersing agent, a chain transfer agent, a pH adjuster, and the like is stirred at room temperature in an inert gas atmosphere to emulsify the monomers and the like in water. Emulsification may be performed by means of stirring, shearing, ultrasonic waves, or the like, with stirring blades, a homogenizer, or the like. Subsequently, the temperature is elevated while stirring the composition to initiate polymerization. As a result, a latex of a spherical polymer (aqueous emulsion of the binder) in which the binder (copolymer of the monomers) is dispersed in water can be obtained. Examples of methods for adding the monomers during polymerization include a method in which the monomers are added all at a time, a monomer dropping method, and a pre-emulsion dropping method. These methods may be used in combination of two or more.

The particle structure of the aqueous emulsion of the binder is not particularly limited. For example, a latex of a polymer containing composite polymer particles of a core-shell structure prepared by seed polymerization may be used. As a method of seed polymerization, a method described in "Bunsan/nyuka-kei-no-kagaku" ("Chemistry of dispersion/emulsion systems") (published by Kougakutosho Co., Ltd.), for example, may be used. This method specifically involves adding monomers, a polymerization initiator, and an emulsifier to a system in which seed particles prepared using the above-described method are dispersed, thereby growing nuclear particles. The above-described method may be repeated more than once.

As the seed for seed polymerization, particles containing a binder (copolymer) suitably used in the present invention or a known polymer may be used. Examples of known polymers include, although not limited to, polyethylene, polypropylene, polyvinyl alcohol, polystyrene, poly(meth)acrylates, and polyethers. Other known polymers may also be used. Alternatively, a homopolymer of one monomer, a copolymer of two or more monomers, or a blend thereof may be used.

Examples of shapes of the particles include a spherical shape, as well as a flat shape, a hollow structure, a composite structure, a localized structure, a *daruma*-shaped (potbellied) structure, an *idako-*shaped (octopus-shaped) structure, and a raspberry-shaped structure. Particles having two or more structures and compositions may be used without departing from the scope of the present invention.

The emulsifier is not particularly limited; for example, nonionic and anionic emulsifiers commonly used for emulsion polymerization may be used. Examples of nonionic emulsifiers include polyoxyethylene alkyl ethers, polyoxyethylene alcohol ethers, polyoxyethylene alkyl phenyl ethers, polyoxyethylene polycyclic phenyl ethers, polyoxyalkylene alkyl ethers, sorbitan fatty acid esters, polyoxyethylene fatty acid esters, and polyoxyethylene sorbitan fatty acid esters. Examples of anionic emulsifiers include alkyl benzene sulfonates, alkyl sulfates, polyoxyethylene alkyl ether sulfates, and fatty acid salts. These emulsifiers may be used alone or in combination of two or more. Representative examples of anionic emulsifiers include sodium dodecyl sulfate, sodium dodecylbenzenesulfonate, and triethanolamine lauryl sulfate.

The amount of the emulsifier to be used may be an amount commonly used in emulsion polymerization. Specifically, the amount of the emulsifier is 0.01 to 10% by mass, preferably 0.05 to 5% by mass, and more preferably 0.05 to 3% by mass, based on the amount of the monomers to be added. When a reactive surfactant is used as a monomer component, an emulsifier need not be added.

The polymerization initiator is not particularly limited, and polymerization initiators commonly used in emulsion polymerization may be used. Specific examples of such polymerization initiators include water-soluble polymerization initiators represented by persulfates such as potassium persulfate, sodium persulfate, and ammonium persulfate; oil-soluble polymerization initiators represented by cumene hydroperoxide and diisopropylbenzene hydroperoxide; hydroperoxides; azo initiators such as 4-4'-azobis(4-cyanovaleric acid), 2-2'-azobis[2-(2-imidazolin-2-yl)propane, 2-2'-azobis(propane-2-carboamidine), 2-2'-azobis[N-(2-carboxyethyl)-2-methylpropanamide, 2-2'-azobis[2-[1-(2-hydroxyethyl)-2-imidazolin-2-yl]propane], 2-2'-azobis(1-imino-1-pyrrolidino-2-methylpropane), and 2-2'-azobis[2-methyl-N-[1,1-bis(hydroxymethyl)-2-hydroxyethyl]propanamide]; and redox initiators. These polymerization initiators may be used alone or in combination of two or more.

The amount of the polymerization initiator to be used may be an amount commonly used in emulsion polymerization. Specifically, the amount of the polymerization initiator is, for example, about 0.01 to 10 parts by mass, preferably about 0.05 to 5 parts by mass, and more preferably about 0.1 to 3 parts by mass, per 100 parts by mass of the monomers to be added.

The amount of the binder contained in the cathode material is, for example, preferably 7 parts by mass or less, and more preferably 5 parts by mass or less, per 100 parts by mass of the cathode active material, although not particularly limited thereto. The lower limit for the amount of the binder is typically 0.05 part by mass or more, 0.1 part by mass or more, 0.2 part by mass or more, 0.5 part by mass or more, or 1 part by mass or more, for example.

The cathode material may further contain a conductive additive, as required. The conductive additive is not particularly limited, and a known conductive additive used for a cathode of a nonaqueous electrolyte secondary battery may be used. Specific examples of such conductive additives include conductive carbon blacks such as acetylene black, ketjen black, carbon fibers, and graphite, conductive polymers, and metal powders. Among the above, a conductive carbon black is particularly preferred.

When a conductive additive is used, the amount of the conductive additive is, for example, preferably 20 parts by mass or less, and more preferably 15 parts by mass or less, per 100 parts by mass of the cathode active material, although not particularly limited thereto. When a conductive additive is contained in the cathode material, the lower limit for the amount of the conductive additive is typically 0.05 part by mass or more, 0.1 part by mass or more, 0.2 part by mass or more, 0.5 part by mass or more, or 2 parts by mass or more, for example.

The cathode material of the present invention is substantially free of a thickener. Because the cathode material of the present invention comprises the above-described specific copolymer as a binder, and is substantially free of a thickener, it has excellent flexibility and binding properties, and can effectively reduce the internal resistance of a nonaqueous electrolyte secondary battery, and effectively improve the charge-discharge cycle characteristics of the nonaqueous electrolyte secondary battery. Examples of thickeners include carboxymethyl cellulose, methyl cellulose, hydroxymethylcellulose, and the like, as well as alkali metal salts or ammonium salts thereof, polyvinyl alcohol, and polyacrylates.

While the cathode material of the present invention is substantially free of a thickener, it may contain a very small amount of thickener without impairing the effects of the present invention. The content of a thickener in the cathode material of the present invention is, for example, preferably 0.1% by mass or less, more preferably 0.05% by mass or less, and still more preferably 0.01% by mass or less.

The method for preparing a cathode material composition (slurry) for forming the cathode material of the present invention is not particularly limited; for example, the cathode active material, the binder, an optionally used conductive additive, a solvent, and the like may be dispersed using a common means such as a stirrer, a disperser, a kneader, a planetary ball mill, or a homogenizer. For increased dispersion efficiency, heating may be performed to an extent such that the materials are not affected.

For the preparation of the cathode material composition in slurry form, the cathode active material, an aqueous emulsion of the binder, a conductive additive, and a solvent (mainly water) are used. The water to be used is not particularly limited, and commonly used water may be used. Specific examples of such water include tap water, distilled water, ion-exchange water, and ultrapure water. Among the above, distilled water, ion-exchange water, and ultrapure water are preferred. Additionally, for the purpose of adjusting the dispersibility and dryability of the slurry, a water-soluble organic solvent such as an alcohol may be mixed. Examples of usable water-soluble organic solvents include, although not limited to, alcohols such as methanol, ethanol, and isopropanol, ketones such as acetone and methyl ethyl ketone, tetrahydrofuran, N-methylpyrrolidone, and dimethylformamide.

In order to improve the coatability of the cathode material composition in slurry form, optionally, a dispersant may be added in advance to the aqueous emulsion, or may be added to the cathode material composition in slurry form. Any commonly used dispersant may be used in any amount, as desired, and the type and the amount of the dispersant to be used are not particularly limited.

The solid concentration in the cathode material composition in slurry form is 10 to 90% by mass, preferably 20 to 85% by mass, and more preferably 30 to 80% by mass.

The proportion of the copolymer in the solids of the cathode material composition in slurry form is preferably about 0.1 to 15% by mass, more preferably about 0.2 to 10% by mass, and still more preferably about 0.3 to 7% by mass.

### 2. Cathode

The cathode of the present invention comprises the cathode material of the present invention described in the "1. Cathode Material" section above and a cathode current collector. Details of the cathode material of the present invention are as described above.

The cathode current collector is not particularly limited, and a known cathode current collector used for a cathode of a nonaqueous electrolyte secondary battery may be used. The cathode current collector may be formed of a substrate of a metal such as, for example, aluminum, nickel, stainless steel, gold, platinum, or titanium.

The cathode is produced by uniformly applying the cathode material composition (coating solution) in slurry form onto a surface of the cathode current collector in an appropriate thickness, using a doctor blade method, an applicator method, a silk screen method, or the like.

The doctor blade method, for example, involves applying the cathode material composition in slurry form onto a surface of the cathode current collector, and then equalizing the thickness of the coating using a blade with a predetermined slit width. After the cathode material composition is applied to the surface of the current collector, the coating is dried with hot air at 100°C or under vacuum at 80°C, for example, in order to remove excess organic solvent and water. After drying, the resulting material is press-molded with a press apparatus to produce a cathode. After pressing, the cathode may be heat-treated again to remove the water, solvent, emulsifier, and the like.

### 3. Nonaqueous Electrolyte Secondary Battery

The nonaqueous electrolyte secondary battery of the present invention comprises the cathode of the present invention described in the "2. Cathode" section above, an anode, and an organic electrolytic solution. That is, the cathode used in the nonaqueous electrolyte secondary battery of the present invention contains the cathode material of the present invention. Details of the cathode of the present invention are as described above.

The anode comprises an anode material and an anode current collector. The anode material contains an anode active material and a binder. The anode active material is not particularly limited, and a known anode active material used for an anode of a nonaqueous electrolyte secondary battery may be used. Examples of the anode active material include powders composed of carbon materials (such as natural graphite, artificial graphite, and amorphous carbon) having a structure (porous structure) capable of intercalation and de-intercalation of alkali metal ions such as lithium ions; and metals such as lithium, an aluminum-based compound, a tin-based compound, and a silicon-based compound that are capable of intercalation and de-intercalation of alkali metal ions such as lithium ions. The particle diameter of the anode active material is, for example, preferably 10 nm or more and 100 µm or less, and more preferably 20 nm or more and 20 µm or less. A mixture of a metal and a carbon material may also be used as the anode active material. The anode active material preferably has a porosity of about 70%.

The binder of the anode is not particularly limited, and a known binder used for an anode of a nonaqueous electrolyte secondary battery may be used. Specific examples of the binder of the anode include one or more compounds selected from a homopolymer or a copolymer of at least one monomer selected from vinylidene fluoride, tetrafluoroethylene, hexafluoropropylene, and trifluoroethylene, a styrene-butadiene copolymer, an acrylic polymer, and a vinyl polymer. Among the above, a vinylidene fluoride polymer, a tetrafluoroethylene polymer, and an acrylic polymer are preferred. As the binder of the anode, the same binders as those mentioned above for the binder of the cathode may be used.

The organic electrolytic solution is not particularly limited, and a known organic electrolytic solution used for an anode of a nonaqueous electrolyte secondary battery may be used. Specific examples of such organic electrolytic solutions include a solution containing a lithium salt compound as an electrolyte and an aprotic organic solvent as a solvent, for example. A single electrolyte or a combination of two or more electrolytes may be used as the electrolyte. Likewise, a single solvent or a combination of two or more solvents may be used as the solvent.

As the lithium salt compound, a lithium salt compound having a wide potential window, such as one commonly used in a lithium-ion battery, is used. Examples of such lithium salt compounds include, although not limited to, LiBF₄, LiPF₆, LiClO₄, LiCF₃SO₃, LiN(CF₃SO₂)₂, LiN(C₂F₅SO₂)₂, and LiN[CF₃SC(C₂F₅SO₂)₃]₂.

Examples of usable aprotic organic solvents include propylene carbonate, ethylene carbonate, dimethyl carbonate, diethyl carbonate, methylethyl carbonate, 1,2-dimethoxyethane, 1,2-diethoxyethane, γ-butyrolactone, tetrahydrofuran, 1,3-dioxolane, dipropyl carbonate, diethyl ether, sulfolane, methylsulfolane, acetonitrile, propylnitrile, anisole, acetates, propionates, and linear ethers such as diethylether. These aprotic organic solvents may be used as a mixture of two or more.

Moreover, an ambient temperature molten salt may be used as the solvent. The "ambient temperature molten salt" refers to a salt that is at least partially liquid at ambient temperature, wherein the "ambient temperature" refers to the range of temperatures where a battery is generally assumed to operate. The range of temperatures where a battery is generally assumed to operate is in the range where the upper limit is about 120°C, potentially about 80°C, and the lower limit is about -40°C, potentially about -20°C.

Ambient temperature molten salts are also referred to as ionic liquids. An ambient temperature molten salt is a "salt" composed of ions (an anion and a cation) only. In particular, an ambient temperature molten salt composed of a liquid compound is referred to as an ionic liquid.

As cationic species of ambient temperature molten salts, pyridine-based, aliphatic amine-based, or alicyclic amine-based organic quaternary ammonium cations are known. Examples of such organic quaternary ammonium cations include imidazolium ions such as dialkylimidazolium ions and trialkylimidazolium ions, tetraalkylammonium ions, alkylpyridinium ions, pyrazolium ion, pyrrolidinium ion, and piperidinium ion. In particular, imidazolium ions are preferred.

Examples of tetraalkylammonium ions include, although not limited to, trimethylethylammonium ion, trimethylethylammonium ion, trimethylpropylammonium ion, trimethylhexylammonium ion, tetrapentylammonium ion, and triethylmethylammonium ion.

Examples of alkylpyridinium ions include, although not limited to, N-methylpyridinium ion, N-ethylpyridinium ion, N-propylpyridinium ion, N-butylpyridinium ion, 1-ethyl-2-methylpyridinium ion, 1-butyl-4-methylpyridinium ion, and 1-butyl-2,4-dimethylpyridinium ion.

Examples of imidazolium ions include, although not limited to, 1,3-dimethylimidazolium ion, 1-ethyl-3-methylimidazolium ion, 1-methyl-3-ethylimidazolium ion, 1-methyl-3-butylimidazolium ion, 1-butyl-3-methylimidazolium ion, 1,2,3-trimethylimidazolium ion, 1,2-dimethyl-3-ethylimidazolium ion, 1,2-dimethyl-3-propylimidazolium ion, and 1-butyl-2,3-dimethylimidazolium ion.

Examples of anionic species of ambient temperature molten salts include inorganic acid ions, for example, halide ions such as chloride ion, bromide ion, and iodide ion, perchlorate ion, thiocyanate ion, tetrafluoroborate ion, nitrate ion, AsF₆⁻, and PF₆⁻; and organic acid ions such as stearylsulfonate ion, octylsulfonate ion, dodecylbenzenesulfonate ion, naphthalenesulfonate ion, dodecylnaphthalenesulfonate ion, and 7,7,8,8-tetracyano-p-quinodimethane ion.

These ambient temperature molten salts may be used alone or in combination of two or more.

Various additives may be used, as required, in the organic electrolytic solution. Examples of such additives include flame retardants, nonflammable agents, cathode surface treatment agents, anode surface treatment agents, and overcharge inhibitors. Examples of flame retardants and nonflammable agents include halides such as brominated epoxy compounds, phosphazene compounds, tetrabromobisphenol A, and chlorinated paraffins, antimony trioxide, antimony pentaoxide, aluminum hydroxide, magnesium hydroxide, phosphates, polyphosphates, and zinc borate. Examples of cathode surface treatment agents include inorganic compounds such as carbon and metal oxides (such as MgO and ZrO₂) and organic compounds such as ortho-terphenyl. Examples of anode surface treatment agents include vinylene carbonate, fluoroethylene carbonate, and polyethylene glycol dimethyl ether. Examples of overcharge inhibitors include biphenyl and 1-(p-tolyl)-adamantane.

The method for producing the nonaqueous electrolyte secondary battery of the present invention is not particularly limited; the nonaqueous electrolyte secondary battery of the present invention may be produced in accordance with a known method, using the cathode, the anode, the organic electrolytic solution, a separator, and the like. In the case of a coin-shaped battery, for example, the cathode, the separator, and the anode are inserted into an external can. The external can is then filled with the electrolytic solution to impregnate the components with the electrolytic solution. Then, the external can is joined to a sealing body by means of tab welding, for example, to encapsulate the sealing body, and then crimped. As a result, a storage battery is obtained. Examples of shapes of the battery include, although not limited to, a coin shape, a cylindrical shape, and a sheet shape. The battery may also have a structure in which two or more batteries are stacked.

The separator serves to prevent short circuits in the storage battery due to direct contact between the cathode and the anode. A known material may be used as the separator. Specific examples of the separator include porous polymer films such as polyolefins, and paper. Preferred porous polymer films include films of polyethylene, polypropylene, and the like, which are unlikely to be affected by the organic electrolytic solution.

For evaluation of characteristics of the cathode material only, metal lithium foil may be used as a counter electrode to evaluate the reversibility of the cathode material. For evaluation of a combination of the cathode material and the anode material, a combination of the cathode material and a carbon-based anode material may be used instead of metal lithium foil.

The nonaqueous electrolyte secondary battery of the present invention has low internal resistance and excellent charge-discharge cycle characteristics. The nonaqueous electrolyte secondary battery of the present invention can be suitably used as secondary batteries including small batteries for electronic apparatuses such as mobile phones, laptop computers, and camcorders, as well as large batteries such as storage batteries for use in electric vehicles, hybrid electric vehicles, and other vehicles, or for storing household electric power.

### Examples

The present invention will be hereinafter described in detail with examples and comparative examples, although the present invention is not limited to the examples.

In the following examples and comparative examples, respective electrodes and coin batteries were produced. For evaluation of each electrode, a bending test (flexibility evaluation) and a binding property test were performed using the following experimental methods. Moreover, for evaluation of the performance of each coin battery, measurement of the internal resistance and a charge-discharge cycle characteristic test were performed using the following experimental methods. The results for each item are shown in Tables 1 and 2.

### <Bending Test>

The bending test was performed using a mandrel bending test. Specifically, the test was performed as follows. Each electrode (cathode sheet) was cut into a sample with a width of 3 cm and a length of 8 cm. The substrate-side (with the electrode surface facing outward) of a central portion (4-cm portion) of the sample in the longitudinal direction was bent at 180° relative to a stainless steel bar with a diameter of 2 mm serving as a support. The condition of the coating at the bent portion was then observed. This measurement was performed five times. Samples that showed no cracking or peeling of the electrode surface or no peeling from the current collector in all the five measurements were evaluated as O. Samples that showed cracking or peeling at one or more locations in at least one of the measurements were evaluated as ×. The results are shown in Table 1.

### <Bending Property Test>

The bending property test was performed using a cross-cut test. Specifically, the test was performed as follows. Each electrode (cathode sheet) was cut into a sample with a width of 3 cm and a length of 4 cm. A right angle lattice pattern with 25 squares, i.e., five squares in length and five squares in width, with each square having a side of 1 mm, was cut in the sample with a cutter knife. Tape (pressure-sensitive tape: Nichiban Co., Ltd.) was applied over the lattice pattern, and then removed at a time with the electrode being fixed thereon. Then, the number of remaining squares that were not peeled from the electrode was counted. This test was performed five times, and the average value of the measurements was determined. The results are shown in Table 1.

### <Measurement of Internal Resistance>

A prepared lithium-ion battery was charged to 4.2 V, using a constant current-constant voltage charging method. The end-of-charge current was equivalent to 2 C. After charging, the battery was stopped for 10 minutes. Next, the battery was discharged at a constant current, and then the internal resistance, R (Ω) = ΔE/I, of the lithium-ion battery was measured based on the current value I (mA) and the voltage drop ΔE (mV) after 10 seconds. The results are shown in Table 2.

### <Charge-Discharge Cycle Characteristics (Capacity Retention Ratio)>

As electrochemical characteristics, the charge-discharge cycle characteristics of a cathode were evaluated as follows. Using a charge/discharge apparatus from Toyo System Co., Ltd., a constant current was passed through the battery at an upper limit of 4.2 V and a lower limit of 2.5 V, under test conditions (C/8) to allow predetermined charging and discharging to be performed in 8 hours from the 1st to 3rd cycles, and then under 1 C at the 4th cycle and thereafter. The test temperature was set to 25°C or 60°C. The capacity retention ratio was evaluated as the ratio of the capacity after 100 charge/discharge cycles to the capacity at the 4th cycle. The results are shown in Table 2.

### [Synthesis Example 1: Synthesis of Binder A]

A 500-ml reaction vessel with a stirrer was charged with 30 parts by mass of polyethylene glycol monoacrylate (BLEMMER AE-400; NOF Corporation), 55 parts by mass of 2-ethylhexyl acrylate, 2 parts by mass of acrylic acid, 13 parts by mass of trimethylolpropane triacrylate (A-TMPT; Shin Nakamura Chemical Co., Ltd), 1 part by mass, calculated as solids, of an aqueous solution of triethanolamine lauryl sulfate (EMAL TD; Kao Corporation) as an emulsifier, 150 parts by mass of ion-exchange water, and 0.1 part by mass of ammonium persulfate as a polymerization initiator. The components were sufficiently emulsified with a homogenizer, and then heated to 60°C in a nitrogen atmosphere to conduct polymerization for 5 hours. The resulting product was then cooled. After cooling, the polymerization liquid was adjusted to a pH of 8.2 with a 28% aqueous solution of ammonia to produce a binder A (polymerization conversion: 99% or more) (solid concentration: 39 wt%) as an emulsion of the polymer of the present invention. The resulting polymer had an average particle diameter of 0.109 µm.

### [Synthesis Example 2: Synthesis of Binder B]

A 500-ml reaction vessel with a stirrer was charged with 47 parts by mass of methyl methacrylate, 33 parts by mass of polypropylene glycol monoacrylate (BLEMMER AP-400; NOF Corporation), 1 part by mass of acrylic acid, 4 parts by mass of methacrylic acid, 15 parts by mass of trimethylolpropane triacrylate (A-TMPT; Shin Nakamura Chemical Co., Ltd), 5 parts by mass of sodium lauryl sulfate (EMAL 10G; Kao Corporation) as an emulsifier, 150 parts by mass of ion-exchange water, and 0.1 part by mass of ammonium persulfate as a polymerization initiator. The components were sufficiently emulsified with a homogenizer, and then heated to 60°C in a nitrogen atmosphere to conduct polymerization for 5 hours. The resulting product was then cooled. After cooling, the polymerization liquid was adjusted to a pH of 8.1 with a 28% aqueous solution of ammonia to produce a binder B (polymerization conversion: 99% or more) (solid concentration: 42 wt%) as an emulsion of the polymer of the present invention. The resulting polymer had an average particle diameter of 0.173 µm.

### [Synthesis Example 3: Synthesis of Binder C]

A 500-ml reaction vessel with a stirrer was charged with 19 parts by mass of polypropylene glycol monoacrylate (BLEMMER AP-400; NOF Corporation), 58.5 parts by mass of methyl methacrylate, 4 parts by mass of methacrylic acid, 1.5 parts by mass of acrylic acid, 17 parts by mass of trimethylolpropane triacrylate (A-TMPT; Shin Nakamura Chemical Co., Ltd), 8 parts by mass of a polyoxyalkylene alkenyl ether solution (PD-420; Kao Corporation) as a reactive emulsifier, 150 parts by mass of ion-exchange water, and 0.1 part by mass of ammonium persulfate as a polymerization initiator. The components were sufficiently emulsified with a homogenizer, and then heated to 60°C in a nitrogen atmosphere to conduct polymerization for 5 hours. The resulting product was then cooled. After cooling, the polymerization liquid was adjusted to a pH of 8.2 with a 28% aqueous solution of ammonia to produce a binder C (polymerization conversion: 99% or more) (solid concentration: 40 wt%) as an emulsion of the polymer of the present invention. The resulting polymer had an average particle diameter of 0.205 µm.

### [Synthesis Example 4: Synthesis of Binder D]

A 500-ml reaction vessel with a stirrer was charged with 5.5 parts by mass of polyethylene glycol monomethacrylate (BLEMMER PE-90; NOF Corporation), 44 parts by mass of methyl methacrylate, 26 parts by mass of 2-ethylhexyl acrylate, 5 parts by mass of methacrylic acid, 1.5 parts by mass of acrylic acid, 18 parts by mass of trimethylolpropane triacrylate (A-TMPT; Shin Nakamura Chemical Co., Ltd), 1 part by mass of sodium lauryl sulfate (EMAL 10G; Kao Corporation) as an emulsifier, 150 parts by mass of ion-exchange water, and 0.1 part by mass of ammonium persulfate as a polymerization initiator. The components were sufficiently emulsified with a homogenizer, and then heated to 60°C in a nitrogen atmosphere to conduct polymerization for 5 hours. The resulting product was then cooled. After cooling, the polymerization liquid was adjusted to a pH of 8.2 with a 28% aqueous solution of ammonia to produce a binder D (polymerization conversion: 99% or more) (solid concentration: 39 wt%) as an emulsion of the polymer of the present invention. The resulting polymer had an average particle diameter of 0.198 µm.

### [Synthesis Example 5: Synthesis of Binder E]

A 500-ml reaction vessel with a stirrer was charged with 20 parts by mass of polyethylene glycol monomethacrylate (BLEMMER AE-200; NOF Corporation), 57 parts by mass of butyl acrylate, 4.5 parts by mass of methacrylic acid, 1.5 parts by mass of acrylic acid, 17 parts by mass of trimethylolpropane triacrylate (A-TMPT; Shin Nakamura Chemical Co., Ltd), 3 parts by mass of a polyoxyalkylene alkenyl ether solution (PD-420; Kao Corporation) as a reactive emulsifier, 150 parts by mass of ion-exchange water, and 0.1 part by mass of ammonium persulfate as a polymerization initiator. The components were sufficiently emulsified with a homogenizer, and then heated to 60°C in a nitrogen atmosphere to conduct polymerization for 5 hours. The resulting product was then cooled. After cooling, the polymerization liquid was adjusted to a pH of 8.2 with a 28% aqueous solution of ammonia to produce a binder E (polymerization conversion: 99% or more) (solid concentration: 40 wt%) as an emulsion of the polymer of the present invention. The resulting polymer had an average particle diameter of 0.206 µm.

### [Comparative Synthesis Example 1: Synthesis of Binder F]

A 500-ml reaction vessel with a stirrer was charged with 80 parts by mass of methyl methacrylate, 3 parts by mass of acrylic acid, 5 parts by mass of methacrylic acid, 12 parts by mass of trimethylolpropane triacrylate (A-TMPT; Shin Nakamura Chemical Co., Ltd), 1 part by mass of sodium dodecylbenzenesulfonate as an emulsifier, 150 parts by mass of ion-exchange water, and 0.2 part by mass of potassium persulfate as a polymerization initiator. The components were sufficiently emulsified with a homogenizer, and then heated to 60°C in a nitrogen atmosphere to conduct polymerization for 5 hours. The resulting product was then cooled. After cooling, the polymerization liquid was adjusted to a pH of 8.1 with a 24% aqueous solution of sodium hydroxide to produce a binder F (polymerization conversion: 99% or more) (solid concentration: 38 wt%) as an emulsion of the polymer of the comparative example. The resulting polymer had an average particle diameter of 0.101 µm.

### [Comparative Synthesis Example 2: Synthesis of Binder G]

A reaction vessel with a stirrer was charged with 17.3 parts by mass of acrylonitrile, 1.1 part by mass of methyl triethylene glycol acrylate (Aldrich), 12.3 parts by mass of acrylic acid, 1 part by mass of sodium dodecylbenzenesulfonate as an emulsifier, 250 parts by mass of ion-exchange water, and 0.14 part by mass of ammonium persulfate as a polymerization initiator. The components were sufficiently emulsified with a homogenizer, and then heated to 60°C in a nitrogen atmosphere to conduct polymerization for 5 hours. The resulting product was then cooled. After cooling, the polymerization liquid was adjusted to a pH of 8.1 with a 24% aqueous solution of sodium hydroxide to produce a binder G (polymerization conversion: 99% or more) (solid concentration: 11 wt%) as an emulsion of the polymer of the comparative example. The resulting polymer had an average particle diameter of 0.154 µm.

### <Production of Cathodes>

### [Example 1]

Lithium manganese oxide with an average particle diameter of 10 µm was used as a cathode active material. To 94 parts by mass of the cathode active material were added 3 parts by mass of acetylene black as a conductive additive and 3 parts by mass, calculated as solids, of the binder A obtained in Synthesis Example 1 as a binder. Additionally, water was added as a solvent to adjust the solid content of the slurry to 55% by mass. The components were sufficiently kneaded with a planetary mill to produce a slurry composition for a cathode. The resulting slurry composition for a cathode was applied onto a 20-µm-thick aluminum current collector using a bar coater with a gap of 100 µm. The slurry composition was dried under vacuum at 110°C for 12 hours or longer, and then pressed with a roller press machine. The slurry composition was further heated-treated at 120°C for 12 hours in an argon gas atmosphere to prepare a cathode sheet 1 with a thickness of 30 µm.

### [Example 2]

A cathode sheet 2 was prepared as in Example 1, except that the binder B obtained in Synthesis Example 2 was used as a binder for the preparation of the cathode.

### [Example 3]

A cathode sheet 3 was prepared as in Example 1, except that the binder C obtained in Synthesis Example 3 was used as a binder for the preparation of the cathode.

### [Example 4]

A cathode sheet 4 was prepared as in Example 1, except that the binder D obtained in Synthesis Example 4 was used as a binder for the preparation of the cathode.

### [Example 5]

A cathode sheet 5 was prepared as in Example 1, except that the binder E obtained in Synthesis Example 5 was used as a binder for the preparation of the cathode.

### [Comparative Example 1]

A cathode sheet 6 was prepared as in Example 1, except that the binder F obtained in Comparative Synthesis Example 1 was used as a binder for the preparation of the cathode.

### [Comparative Example 2]

A cathode sheet 7 was prepared as in Example 1, except that the binder G obtained in Comparative Synthesis Example 2 was used as a binder for the preparation of the cathode.

### [Comparative Example 3]

A cathode sheet 8 was prepared as in Example 1, except that 2 parts by mass, calculated as solids, of the binder A obtained in Synthesis Example 1 as a binder for the preparation of the cathode and 1 part by mass of the sodium salt of carboxymethyl cellulose were used.

**Table 1**

| | Flexibility of Cathode Material | Binding Properties of Cathode Material |
|---|---|---|
| Example 1 | ○ | 25/25 |
| Example 2 | ○ | 25/25 |
| Example 3 | ○ | 25/25 |
| Example 4 | ○ | 25/25 |
| Example 5 | ○ | 25/25 |
| Comparative Example 1 | × | 0/25 |
| Comparative Example 2 | × | 5/25 |
| Comparative Example 3 | ○ | 25/25 |

The results clarified that the cathode materials of Examples 1 to 5, each comprising a cathode active material and a binder, wherein the binder was a copolymer comprising a structural unit (A) derived from a (meth)acrylate monomer, a structural unit (B) derived from a carboxylic acid group-containing ethylenically unsaturated monomer, and a structural unit (C) derived from a polyfunctional (meth)acrylate monomer having a functionality of 5 or less, and the cathode material was free of a thickener, had excellent flexibility and binding properties.

### <Production Examples of Batteries>

### [Production Example 1 of Coin Battery]

In a glove box purged with argon gas, a laminate prepared by bonding the cathode obtained in Example 1 of Electrode, two porous films of polypropylene/polyethylene/polypropylene with a thickness of 18 µm as separators, and metal lithium foil with a thickness of 300 µm as a counter electrode was placed in a coin cell. The laminate was then sufficiently impregnated with a 1 mol/L solution of lithium hexafluorophosphate in ethylene carbonate and dimethyl carbonate (volume ratio: 1:1) as an electrolytic solution. Then, the coin cell was crimped to produce a 2032-type test coin battery.

### [Production Example 2 of Coin Battery]

A coin battery was prepared as in Production Example 1 of Coin Battery, except that the cathode obtained in Example 2 of Electrode was used.

### [Production Example 3 of Coin Battery]

A coin battery was prepared as in Production Example 1 of Coin Battery, except that the cathode obtained in Example 3 of Electrode was used.

### [Production Example 4 of Coin Battery]

A coin battery was prepared as in Production Example 1 of Coin Battery, except that the cathode obtained in Example 4 of Electrode was used.

### [Production Example 5 of Coin Battery]

A coin battery was prepared as in Production Example 1 of Coin Battery, except that the cathode obtained in Example 5 of Electrode was used.

### [Comparative Production Example 1 of Coin Battery]

A coin battery was prepared as in Production Example 1 of Coin Battery, except that the cathode obtained in Comparative Example 1 of Electrode was used.

### [Comparative Production Example 2 of Coin Battery]

A coin battery was prepared as in Production Example 1 of Coin Battery, except that the cathode obtained in Comparative Example 2 of Electrode was used.

### [Comparative Production Example 3 of Coin Battery]

A coin battery was prepared as in Production Example 1 of Coin Battery, except that the cathode obtained in Comparative Example 3 of Electrode was used.

**Table 2**

| | Internal Resistance (Ω) | Capacity Retention Ratio after 100 Cycles (%) | |
|---|---|---|---|
| | | 25°C | 60°C |
| Production Example 1 | 12.1 | 96 | 95 |
| Production Example 2 | 12.0 | 97 | 96 |
| Production Example 3 | 11.4 | 97 | 96 |
| Production Example 4 | 11.2 | 96 | 96 |
| Production Example 5 | 11.8 | 97 | 96 |
| Comparative Production Example 1 | 12.9 | 86 | 72 |
| Comparative Production Example 2 | 13.1 | 82 | 68 |
| Comparative Production Example 3 | 12.5 | 90 | 82 |

The results clarified that the nonaqueous electrolyte secondary batteries of Production Examples 1 to 5 obtained using the cathode materials of Examples 1 to 5 had low internal resistance and excellent charge-discharge cycle characteristics.

## Claims

1. A cathode material comprising a cathode active material and a binder, wherein the binder is a copolymer comprising a structural unit (A) derived from a (meth)acrylate monomer, a structural unit (B) derived from a carboxylic acid group-containing ethylenically unsaturated monomer, and a structural unit (C) derived from a polyfunctional (meth)acrylate monomer having a functionality of 5 or less, and
the cathode material is substantially free of a thickener.

2. The cathode material according to claim 1, wherein the (meth)acrylate monomer of the structural unit (A) is at least one of a hydroxyl group-containing (meth)acrylate and a (meth)acrylate.

3. The cathode material according to claim 2, wherein the hydroxyl group-containing (meth)acrylate is an alkylene glycol mono(meth)acrylate having a molecular weight of 100 to 1000.

4. The cathode material according to any one of claims 1 to 3, wherein the carboxylic acid group-containing ethylenically unsaturated monomer of the structural unit (B) is (meth)acrylic acid.

5. The cathode material according to any one of claims 1 to 4, wherein the copolymer comprises a structural unit (A-1) derived from a hydroxyl group-containing (meth)acrylate monomer, a structural unit (A-2) derived from a (meth)acrylate monomer, a structural unit (B) derived from a carboxylic acid group-containing ethylenically unsaturated monomer, and a structural unit (C) derived from a polyfunctional (meth)acrylate monomer, and
the copolymer has a mass ratio of the structural units (A-1), (A-2), (B), and (C) of 1-45:15-98:0.5-15:0.5-25.

6. The cathode material according to any one of claims 1 to 5, wherein the cathode active material comprises an alkali metal-containing composite oxide represented by any of the compositions:
AMO₂, wherein A represents an alkali metal, and M comprises a single transition metal or two or more transition metals, and optionally partially comprises a non-transition metal;
AM₂O₄, wherein A represents an alkali metal, and M comprises a single transition metal or two or more transition metals, and optionally partially comprises a non-transition metal;
A₂MO₃, wherein A represents an alkali metal, and M comprises a single transition metal or two or more transition metals, and optionally partially comprises a non-transition metal; and
AMBO₄, wherein A represents an alkali metal, B represents P, Si, or a mixture thereof, and M comprises a single transition metal or two or more transition metals, and optionally partially comprises a non-transition metal.

7. A cathode for a nonaqueous electrolyte secondary battery comprising the cathode material according to any one of claims 1 to 6 and a cathode current collector.

8. A method for producing a cathode for a nonaqueous electrolyte secondary battery comprising the step of applying the cathode material according to any one of claims 1 to 6 to a surface of a cathode current collector.

9. A nonaqueous electrolyte secondary battery comprising the cathode according to claim 7, an anode, and an organic electrolytic solution.
